# FASCICULE DE BREVET EUROPEEN

(11) **EP 1 756 526 B1**
(45) Date de publication et mention de la délivrance du brevet: **20.08.2008**
(21) Numéro de dépôt: 05740601.9
(22) Date de dépôt: 07.04.2005
(51) Int. Cl.: G01D 5/245

(54) **DISPOSITIF ET UN PROCEDE POUR DETERMINER LA POSITION D'UN MOTEUR**
EINRICHTUNG UND VERFAHREN ZUR BESTIMMUNG DER POSITION EINES MOTORS
DEVICE AND METHOD FOR DETERMINING THE POSITION OF AN ENGINE

(30) Priorité: 18.06.2004 FR 0406625
(43) Date de publication de la demande: 28.02.2007
(73) Titulaire: Siemens VDO Automotive, 31036 Toulouse Cedex 1 (FR)
(72) Inventeur: CANTIE, Frédéric, F-31000 Toulouse (FR); TEULINGS, Willem, F-31470 Fontenilles (FR)
(86) Numéro de dépôt international: PCT/EP2005/003648
(87) Numéro de publication internationale: WO 2005/124287

(56) Documents cités:
- EP-A- 1 186 894
- US-A- 5 568 048
- US-A1- 2002 057 084

## Description

L'invention concerne un dispositif et un procédé pour déterminer la position d'un moteur à combustion interne comprenant un organe rotatif.

Il est utile de connaître avec précision la position d'un moteur à combustion interne, notamment afin d'en améliorer le démarrage et plus précisément de réduire le temps de démarrage, voire de permettre le démarrage direct du moteur sans démarreur. En effet, une meilleure connaissance de la position du moteur permet de sélectionner les cylindres à alimenter en carburant, de déterminer la quantité optimale de carburant à injecter, ainsi que l'instant optimal d'allumage.

On connaît déjà du document US 55 68048 un dispositif comprenant :
- un capteur délivrant un signal prenant des valeurs discrètes et comportant une partie rotative et une partie fixe, ladite partie rotative étant liée à l'organe rotatif et comprenant une pluralité de repères sensiblement identiques décalés angulairement d'un incrément, ladite partie fixe comprenant :
   - des premiers moyens pour générer un premier signal fonction de la position relative des repères par rapport à la partie fixe,
   - des deuxièmes moyens pour générer un deuxième signal fonction de la position relative des repères par rapport à la partie fixe, lesdits premier signal et deuxième signal étant similaires mais déphasés,
   - des moyens d'analyse reliés aux premiers moyens et aux deuxièmes moyens, lesdits moyens d'analyse comprenant des troisièmes moyens pour détecter un évènement caractéristique sur le premier signal et des quatrièmes moyens pour générer un troisième signal, de type binaire prenant une première valeur ou une seconde valeur, lesdits quatrièmes moyens générant un basculement du troisième signal entre la première valeur et la seconde valeur après détection de l'évènement caractéristique sur le premier signal,
- des moyens de contrôle moteur reliés aux moyens d'analyse du capteur, lesdits moyens de contrôle moteur comprenant :
   - un compteur destiné à représenter la position de l'organe rotatif,
   - des cinquièmes moyens pour détecter les basculements du troisième signal entre la première valeur et la seconde valeur et modifier le compteur en fonction desdits basculements,
- des sixièmes moyens pour générer des actions sur des organes moteurs tels que des bougies d'allumage ou des injecteurs de carburant en fonction de la valeur du compteur.

Toutefois, si ce dispositif s'avère satisfaisant lorsque le moteur tourne toujours dans le même sens, en revanche il ne permet plus de connaître précisément la position du moteur si celui-ci tourne en sens inverse. Par exemple, lorsque le moteur à combustion interne est en phase d'arrêt, il oscille autour d'une position d'équilibre mécanique. Durant cette phase d'arrêt où le sens de rotation varie en permanence, le dispositif de l'art antérieur se trompe dans le décompte des évènements et il ne permet donc plus de connaître la position du moteur.

En effet, la pluralité de repères est notamment constituée par la succession de creux et de dents d'une roue dentée et l'évènement caractéristique apparaissant sur le premier signal est généralement constitué par le passage par une valeur de référence soit en croissant soit en décroissant. La valeur de référence correspond usuellement à la valeur moyenne de ce premier signal. Pour différentes raisons techniques et notamment la compatibilité entre les dispositifs de différentes générations, un seul type de passage par la valeur de référence est détecté. Ainsi, il peut être choisi d'affecter au passage du premier signal par la valeur de référence en croissant la détermination d'une dent (respectivement d'un creux selon le protocole choisi). Il peut également être choisi d'affecter au passage du premier signal par la valeur de référence en décroissant la détermination d'une dent (respectivement d'un creux selon le protocole choisi).

Or il est apparu qu'un tel dispositif délivre une information erronée lorsque le moteur à combustion interne est amené à tourner en sens inverse. En effet, bien que le passage par la valeur de référence dans le sens croissant (par exemple) du premier signal corresponde physiquement au passage d'une dent dans un sens de rotation, le passage par la valeur de référence dans le sens croissant dans l'autre sens de rotation ne correspond plus physiquement au passage d'une dent (mais d'un creux). Le capteur signale donc des dents dans un sens donné, et des creux dans l'autre sens. Par conséquent, les moyens d'analyse sont induits en erreur par cette confusion.

L'invention vise à remédier à cet inconvénient, pour un coût modéré et en conservant la compatibilité avec les précédentes générations de capteurs, autrement dit en ne détectant que le passage des dents (respectivement des creux), en plus du sens de rotation, quel que soit ce dernier.

Pour ce faire, conformément à l'invention, les moyens d'analyse comprennent en outre :
- des moyens de comparaison pour comparer la valeur du deuxième signal à une valeur de référence, lorsqu'un évènement caractéristique est relevé sur le premier signal,
- des moyens de commande pour commander aux quatrièmes moyens de basculer le troisième signal entre la première valeur et la seconde valeur uniquement lorsqu'un évènement caractéristique est relevé sur le premier signal et lorsque le résultat de la comparaison est positif.

Ainsi, quelque soit le sens de rotation du moteur, on détecte toujours physiquement les mêmes évènements mécaniques (par exemple le passage d'une dent). Par conséquent, les moyens d'analyse ne sont plus induits en erreur. La position du moteur est donc correctement connue même si le moteur tourne en sens inverse.

Or, comme mentionné précédemment, le moteur à combustion interne à tendance à osciller avant de s'arrêter. Selon une autre caractéristique avantageuse conforme à l'invention, le dispositif présente les caractéristiques suivantes:
- les moyens d'analyse comprennent des septièmes moyens pour relever la variation du premier signal lorsqu'un évènement caractéristique est relevé sur le premier signal et la comparer à une valeur de référence, et
- les quatrièmes moyens génèrent un basculement de la seconde valeur à la première valeur après le maintien de la seconde valeur pendant une durée fonction du résultat de la comparaison entre les variations du premier signal relevées par les septièmes moyens avec la valeur de référence,
- les cinquièmes moyens comparent à une valeur de référence la durée entre le basculement de la première valeur à la seconde valeur et le basculement de la seconde valeur à la première valeur, et incrémentent ou décrémentent le compteur en fonction du résultat de cette comparaison.

Ainsi, les moyens d'analyse détectent le sens de rotation du moteur. En effet, la variation de la valeur du compteur sera positive quand le moteur tourne dans un sens et négative quand il tourne dans l'autre.

L'intervalle entre les deux basculements successifs du troisième signal est aisément relevé par les cinquièmes moyens.

La valeur du compteur est donc toujours en accord avec la position physique de l'organe rotatif quelque soient le sens de rotation et les oscillations de l'organe rotatif.

Selon une autre caractéristique avantageuse conforme à l'invention, le dispositif présente les caractéristiques suivantes :
- la partie fixe du capteur comprend :
   - une première sonde générant un quatrième signal sensiblement sinusoïdal,
   - une deuxième sonde similaire à la première sonde, disposée à proximité de la première sonde et générant un cinquième signal sensiblement similaire au quatrième signal mais déphasé par rapport au quatrième signal,
   - des moyens pour soustraire le cinquième signal au quatrième signal, générant le premier signal,
- les troisièmes moyens détectent le passage du premier signal par la valeur nulle.

Ainsi, les dérives que peuvent subir dans le temps le quatrième signal et le cinquième signal, du fait de variations d'entrefer, température ou autres sont atténuées. Le dispositif possède ainsi une grande précision et une grande robustesse.

De manière complémentaire, le dispositif présente avantageusement les caractéristiques suivantes :
- les deuxièmes moyens comprennent une troisième sonde, similaire à la première sonde et à la deuxième sonde, disposée sensiblement au milieu de la première et de la deuxième sonde, ledit deuxième signal variant entre une valeur minimale et une valeur maximale,
- les moyens de comparaison comparent la valeur du deuxième signal à sa valeur minimale et/ou à sa valeur maximale lorsque l'évènement caractéristique est relevé sur le premier signal.

Ainsi, le premier signal et le deuxième signal sont tous les deux sensiblement sinusoïdaux et en quadrature de phase. Par conséquent, quand le premier signal prend la valeur nulle, le deuxième signal est sensiblement à une valeur extrême (maximale ou minimale). Dans ces conditions, on détermine avec précision lequel des passages du premier signal par la valeur nulle doit générer une modification du compteur et lequel ne doit pas modifier le compteur.

L'invention concerne en outre un procédé. On connaît déjà un procédé dans lequel on utilise un capteur comportant une partie fixe et une partie rotative, la partie rotative comprenant une pluralité de repères sensiblement identiques décalés angulairement d'un incrément, ledit capteur générant un premier signal et un deuxième signal similaires mais déphasés, et on transmet un signal binaire prenant une première valeur ou seconde valeur, du capteur vers des moyens de contrôle moteur. Ledit procédé comprend les étapes suivantes :
a) on détecte un évènement caractéristique sur le premier signal,
b) on fait basculer le troisième signal de la première à la seconde valeur,
c) on détecte dans les moyens de contrôle moteur les basculements du troisième signal et on compte dans un compteur le nombre de basculements du troisième signal,
d) on génère des actions sur des organes moteurs tels que des bougies d'allumage ou des injecteurs de carburant en fonction de la valeur du compteur.

Ce procédé présente les inconvénients précités en relation avec l'inversion du sens de rotation. Pour y remédier, conformément à l'invention, lors de l'étape a), en outre, on compare la valeur du deuxième signal à une valeur de référence et on ne réalise l'étape b) que si le résultat de la comparaison entre la valeur du deuxième signal et la valeur de référence lors de l'étape a) est positif.

Selon une caractéristique avantageuse conforme à l'invention, on réalise les étapes suivantes :
- on utilise un capteur générant un quatrième signal et un cinquième signal similaires, mais déphasés,
- on génère le premier signal en soustrayant le cinquième signal au quatrième signal, et
- lors de l'étape a), on détecte le passage du premier signal par la valeur nulle.

On améliore ainsi la précision de la détection de la position de l'organe rotatif.

L'invention va apparaître encore plus clairement dans la description qui va suivre, faite en référence aux dessins annexés dans lesquels :
- la figure 1 est une représentation schématique d'un dispositif conforme à l'invention,
- la figure 2 est une représentation détaillée d'une partie du dispositif de la figure 1,
- la figure 3 illustre différents signaux générés dans le dispositif.

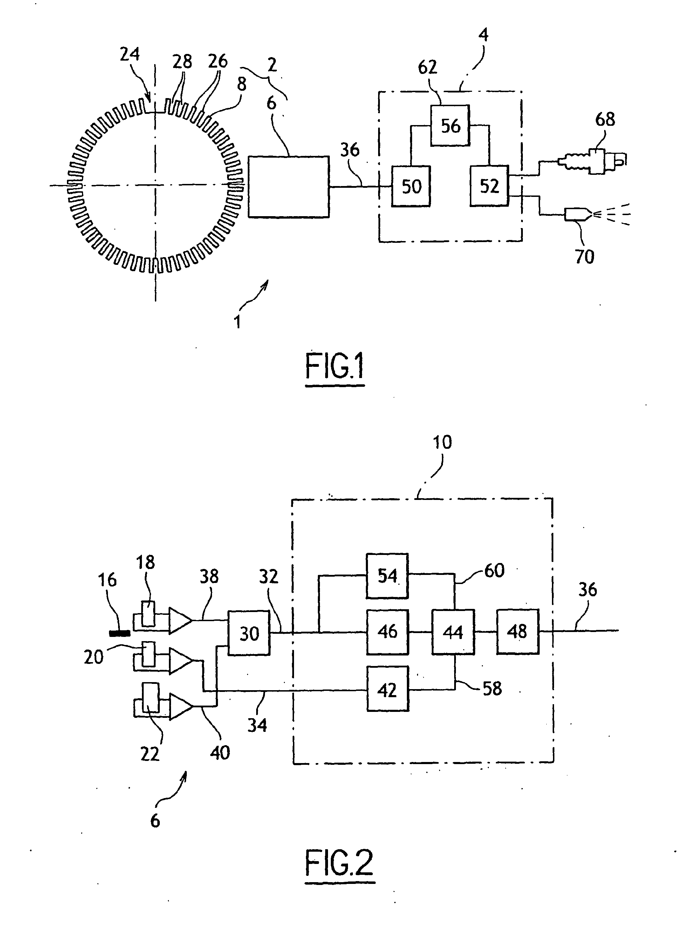

La figure 1 illustre un dispositif 1 comprenant essentiellement un capteur 2 et une unité 4 de contrôle moteur.

La capteur 2 comprend une partie rotative 8 solidaire du vilebrequin du moteur et une partie fixe 6 destinée à relever les déplacements de la partie rotative 8. La partie fixe 6 est représentée plus en détail à la figure 2.

La partie rotative 8 comprend un disque 8 ferromagnétique constitué d'une succession de soixante dents 26 et de soixante creux 28 uniformément répartis, de sorte que les dents 26 (respectivement les creux 28) sont disposés en périphérie du disque 8 tous les six degrés, ce qui définit un incrément de rotation du vilebrequin. En fait, deux dents ont été retirées au disque 8 afin de repérer une position de référence 24 du vilebrequin. Un autre nombre de dents et de creux est également possible sans sortir pour autant de la portée de la présente invention.

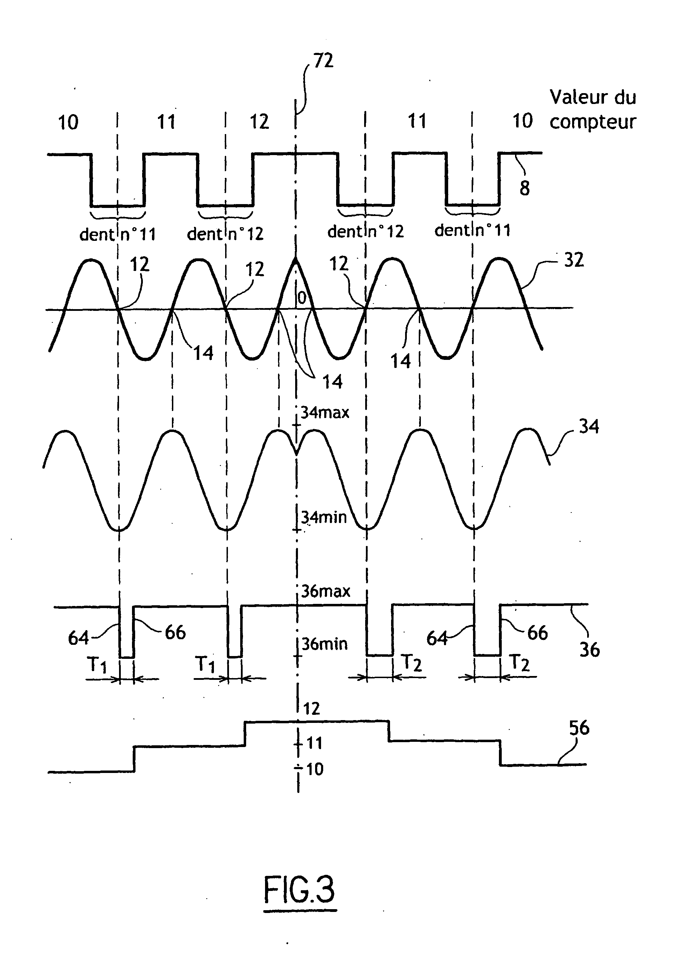

La partie fixe 6 comprend un aimant 16, trois sondes à effet Hall ou de type magnéto résistif identiques 18, 20, 22, un montage soustracteur 30 et une unité d'analyse 10. L'aimant 16 génère un champ magnétique qui est modifié par la présence des dents 26 du disque 8, de sorte que la tension 38, 34, 40 relevée par les sondes 18, 20, 22 est sensiblement sinusoïdale et fonction de la position des dents 26 par rapport aux sondes. Tel qu'illustré à la figure 3, en relation avec le signal 34, la tension est maximale lorsque la sonde est en regard du sommet d'un creux 28. La courbe repérée 8 représente le disque tel qu'il est vu par la partie fixe 6 du capteur 2 avec sa succession de dents 26 et de creux 28. Les nombres indiqués au-dessus des dents 26 correspondent au numéro des dents passant devant la partie fixe 6 du capteur, compté depuis la position de référence 24.

La sonde 20 est située au milieu de la sonde 18 et de la sonde 22 à moins d'une largeur de dent par rapport à la sonde 18 et à la sonde 22.

Le montage soustracteur 30 génère un signal 32 correspondant à la différence entre la tension 38 issue de la sonde 18 et de la tension 40 issue de la sonde 22. Tel que représenté à la figure 3, le signal 32 est sensiblement sinusoïdal, présente une valeur moyenne proche de zéro et est en quadrature de phase avec le signal défini par la tension 34 issue de la sonde 20.

Il est à noter que si la valeur moyenne du signal 32 n'est pas proche de zéro, une élimination de la composante continue peut-être réalisée pour ramener ladite valeur moyenne à zéro.

Les signaux 32, 34 sont entrés dans l'unité d'analyse 10, laquelle détecte les déplacements du vilebrequin d'un incrément de rotation et transmet l'information à l'unité 4 de contrôle moteur. L'unité d'analyse 10 comprend une unité de commande 44, une unité de détection 46, un générateur 48 de signal binaire 36 et deux comparateurs 54, 42 recevant les signaux 32, 34 et générant des signaux 58, 60 entrant dans l'unité de commande 44.

L'unité de détection 46 détecte les passages 12, 14 du signal 32 par la valeur nulle. L'unité de commande 44 détermine alors si le signal 34 est à sa valeur maximale 34_{MAX} ou à sa valeur minimale 34ₘᵢₙ en fonction du signal 58 reçu du comparateur 42. En pratique, le signal 58 est binaire et fonction de la valeur du signal 34 par rapport à la moyenne entre sa valeur maximale 34_{MAX} et sa valeur minimale 34ₘᵢₙ.

Lorsque le signal 34 est à sa valeur minimale 34ₘᵢₙ, la sonde 20 est en regard d'une dent 26. Entre deux passages consécutifs par la valeur minimale 34ₘᵢₙ du signal 34, le disque 38 s'est déplacé d'un incrément, s'il n'a pas changé de sens de rotation. L'unité de commande 44 commande alors au générateur 48 de faire basculer le signal 36 de la valeur 36_{MAX} à la valeur 36ₘᵢₙ.

Pour connaître le sens de rotation, on détermine avec le comparateur 54 et le signal 60 qu'il transmet à l'unité de commande 44 si le signal 32 est croissant ou décroissant lorsqu'il passe par la valeur nulle en mesurant la valeur du signal 32 un instant après être passé par la valeur nulle.

Si le signal 32 est négatif après s'être annulé, alors le moteur tourne dans le sens normal et l'unité de commande 44 commande au générateur 48 de faire basculer le signal 36 de la valeur 36ₘᵢₙ à la valeur 36_{MAX} après être resté à la valeur 36ₘᵢₙ pendant une durée T₁.

Si le signal 32 est croissant, autrement dit positif après s'être annulé, alors le moteur tourne dans le sens inverse et l'unité de commande 44 commande au générateur 48 de faire basculer le signal 36 de la valeur 36ₘᵢₙ à la valeur 36_{MAX} après être resté à la valeur 36ₘᵢₙ pendant une durée T₂.

La durée T₂ est distincte de la durée T₁. Avantageusement, la durée T₂ est deux fois plus longue que la durée T₁ . A la figure 3, le trait mixte repéré 72 symbolise une inversion de sens de rotation du moteur. On s'aperçoit que malgré l'inversion du sens de rotation, la valeur du compteur 56 est toujours conforme au numéro de la dent qui est en regard du dispositif 6.

L'unité 4 de contrôle moteur comprend une unité de détection 50, un compteur 56 et une unité de commande 52 reliée à des organes de fonctionnement d'un moteur à combustion interne et en particulier des bougies d'allumage 68 et des injecteurs de carburant 70.

L'unité de détection 50 relève les basculements 64 du signal 36 de la valeur 36_{MAX} à la valeur 36ₘᵢₙ, les basculements 66 du signal 36 de la valeur 36ₘᵢₙ à la valeur 36_{MAX}, et la durée Tₘₑₛ séparant ces basculements. Si cette durée est égale à T₁, elle incrémente le compteur 56 après chaque basculement 64, si elle est égale à T₂, elle décrémente le compteur 56 après chaque basculement 64. En pratique, on compare la durée relevée Tₘₑₛ à la moyenne des valeurs T₁ et T₂ pour incrémenter ou décrémenter le compteur.

Lorsque la position de référence 24 du disque 8 est en regard de la partie fixe 6 du capteur 2, le signal 32 ne prend pas la valeur nulle, le signal 36 reste donc à la valeur 36_{MAX} pendant une longue période qui est détecté par l'unité de détection 50 et un tour sur deux, le compteur 56 est ramené à zéro, afin de connaître la position du moteur sur deux tours de vilebrequin.

La présente invention ne se limite pas au mode de réalisation décrit précédemment et toute modification à la portée de l'homme de métier est envisageable

Il est par exemple possible de choisir une valeur de référence autre que le passage par zéro du premier signal 32.

Il est également envisageable de choisir deux valeurs de référence ou plus. En effet, le choix du passage du signal 32 par la valeur nulle en tant que valeur de référence revient à utiliser deux valeurs: une première qui est le passage par zéro en mode croissant 12 et une seconde qui est le passage par zéro en mode décroissant 14. Dans l'exemple présenté ci dessus, il est tout à fait possible de prendre deux valeurs de référence non nulles, en les choisissant de telle manière que l'une est au dessus de la valeur moyenne du signal 32 et l'autre en dessous, afin de permettre (en raison de la quadrature de phase entre les deux signaux 32 et 34) une identification immédiate de l'événement par comparaison des signaux 32 et 34.

De même, il est tout à fait envisageable de travailler avec des premier et second signaux 32, 34 qui ne sont pas en quadrature de phase mais présentent un déphasage quelconque entre eux, car le fait de comparer les signaux 32 et 34 permet d'atteindre l'objectif souhaité, là où des dispositifs de l'art antérieur fournissent des informations erronées.

## Revendications

1. Dispositif (1) pour déterminer la position d'un moteur à combustion interne comprenant un organe rotatif, ledit dispositif comprenant :
- un capteur (2) comportant une partie rotative (8) et une partie fixe (6), ladite partie rotative (8) étant liée à l'organe rotatif et comprenant une pluralité de repères (26) sensiblement identiques décalés angulairement d'un incrément, ladite partie fixe (6) comprenant :
• des premiers moyens (16, 18, 22, 30) pour générer un premier signal (32) fonction de la position relative des repères (26) par rapport à la partie fixe (6),
• des deuxièmes moyens (16, 20) pour générer un deuxième signal (34) fonction de la position relative des repères (26) par rapport à la partie fixe (6), lesdits premier signal (32) et deuxième signal (34) étant similaires mais déphasés,
• des moyens d'analyse (10) reliés aux premiers moyens (16, 18, 22, 30) et aux deuxièmes moyens (16, 20), lesdits moyens d'analyse (10) comprenant des troisièmes moyens (46) pour détecter au moins un évènement caractéristique (12, 14) sur le premier signal et des quatrièmes moyens (48) pour générer un troisième signal (36), de type binaire prenant une première valeur (36_{MAX}) ou une seconde valeur(36ₘᵢₙ), lesdits quatrièmes moyens (18) générant un basculement du troisième signal (36) entre la première valeur (36_{MAX}) et la seconde valeur (36ₘᵢₙ) après détection de l'au moins un des évènements caractéristiques (12, 14) sur le premier signal (32),
- des moyens de contrôle moteur (4) reliés aux moyens d'analyse du capteur (10), lesdits moyens de contrôle moteur (4) comprenant :
• un compteur (56) destiné à représenter la position de l'organe rotatif,
• des cinquièmes moyens (50) pour détecter les basculements du troisième signal (36) entre la première valeur (36_{MAX}) et la seconde valeur (36ₘᵢₙ) et modifier le compteur (56) en fonction desdits basculements,
• des sixièmes moyens (52) pour générer des actions sur des organes moteurs tels que des bougies d'allumage (68) ou des injecteurs de carburant (70) en fonction de la valeur du compteur (56),
**caractérisé en ce que** les moyens d'analyse (10) comprennent en outre :
- des moyens de comparaison (42) pour comparer la valeur du deuxième signal (34) à une valeur de référence, lorsque un évènement caractéristique (12, 14) est relevé sur le premier signal (32),
- des moyens de commande (44) pour commander aux quatrièmes moyens (48) de basculer le troisième signal (36) entre la première valeur (36_{MAX}) et la seconde valeur (36ₘᵢₙ) uniquement lorsque un évènement caractéristique (12, 14) est relevé sur le premier signal (32) et lorsque le résultat de la comparaison (58) est positif.

2. Dispositif selon la revendication 1, **caractérisé en ce que :**
- les moyens d'analyse (10) comprennent en outre des septièmes moyens (54) pour relever la variation du premier signal lorsque un évènement caractéristique (12, 14) est relevé sur le premier signal (32) et la comparer à une valeur de référence, et
- les quatrièmes moyens (48) génèrent un basculement (66) de la seconde valeur (36ₘᵢₙ) à la première valeur (36_{MAX}) après le maintien de la seconde valeur (36ₘᵢₙ) pendant une durée (T₁, T₂) fonction du résultat de la comparaison (60) entre les variations du premier signal (32) avec la valeur de référence,
- les cinquièmes moyens (50) comparent à une valeur de référence la durée (T₁, T₂) entre le basculement (64) de la première valeur (36_{MAX}) à la seconde valeur (36ₘᵢₙ) et le basculement (66) de la seconde valeur (36ₘᵢₙ) à la première valeur (36_{MAX}), et incrémentent ou décrémentent le compteur (56) en fonction du résultat (62) de cette comparaison.

3. Dispositif selon l'une quelconque des revendications précédentes, **caractérisé en ce que :**
- la partie fixe du capteur comprend :
• une première sonde (18) générant un quatrième signal (38) sensiblement sinusoïdal,
• une deuxième sonde (22) similaire à la première sonde (18), disposée à proximité de la première sonde (18) et générant un cinquième signal (40) sensiblement similaire au quatrième signal (38) mais déphasé par rapport au quatrième signal (38),
• des moyens (30) pour soustraire le cinquième signal (40) au quatrième signal (38), générant le premier signal (32),
- les troisièmes moyens (46) détectent le passage du premier signal (32) par la valeur nulle.

4. Dispositif selon la revendication 3, **caractérisé en ce que** :
- les deuxièmes moyens comprennent une troisième sonde (20), similaire à la première sonde (18) et à la deuxième sonde (22), disposée sensiblement au milieu de la première sonde (18) et de la deuxième sonde (22), ledit deuxième signal (34) variant entre une valeur minimale (34ₘᵢₙ) et une valeur maximale (34_{MAX}),
- les moyens de comparaison (42) comparent la valeur du deuxième signal (34) à sa valeur minimale (34ₘᵢₙ) et/ou à sa valeur maximale (34_{MAX}) lorsque l'évènement caractéristique (12 14) est relevé sur le premier signal (32).

5. Dispositif selon l'une quelconque des revendications précédentes **caractérisée en ce que** la partie fixe du capteur comprend un aimant (16), la partie rotative du capteur comprend une pluralité de dents ferromagnétiques (26), et les premiers moyens et les deuxièmes moyens comprennent chacun une sonde à effet Hall ou de type Magnétorésistif (18, 20, 22).

6. Procédé pour déterminer la position d'un moteur à combustion interne comprenant un organe rotatif, dans lequel :
- on utilise un capteur (2) comportant une partie fixe (6) et une partie rotative (8), la partie rotative (8) comprenant une pluralité de repères (26) sensiblement identiques décalés angulairement d'un incrément, ledit capteur générant un premier signal (32) et un deuxième signal (34) similaires mais déphasés,
- on transmet un signal binaire (36) prenant une première valeur (36_{MAX}) ou seconde valeur (36ₘᵢₙ), du capteur (2) vers des moyens de contrôle moteur (4), ledit procédé comprenant les étapes suivantes :
a) on détecte un évènement caractéristique (12, 14) sur le premier signal (32),
b) on fait basculer (64) le troisième signal (36) de la première valeur (36_{MAX}) à la seconde valeur (36ₘᵢₙ),
c) on détecte dans les moyens de contrôle moteur (4) les basculements (64) du troisième signal (36) et on compte dans un compteur (56) le nombre de basculements du troisième signal (36),
d) on génère des actions sur des organes moteurs tels que des bougies d'allumage (68) ou des injecteurs de carburant (70) en fonction de la valeur du compteur (56),
**caractérisé en ce que** lors de l'étape a), en outre, on compare (42) la valeur du deuxième signal (34) à une valeur de référence et on ne réalise l'étape b) que si le résultat (58) de la comparaison entre la valeur du deuxième signal (34) et la valeur de référence lors de l'étape a) est positif.

7. Procédé selon la revendication 6, **caractérisé en ce que :**
- on relève (54) la variation du premier signal (32) lors de l'étape a),
- lors d'une étape e), on compare ladite variation à une valeur de référence, et
- après l'étape b), on maintient le troisième signal (36) à la seconde valeur (36ₘᵢₙ) pendant une durée (T₁, T₂) fonction du résultat (60) de la comparaison entre la variation du premier signal (32) relevée et la valeur de référence, puis on fait basculer (66) le troisième signal (36) de la seconde valeur (36ₘᵢₙ) à la première valeur (36_{MAX}), on relève dans les moyens de contrôle moteur (4) la durée entre le basculement (64) du troisième signal (36) de la première valeur (36_{MAX}) à la seconde valeur (36ₘₗₙ) et le basculement (66) de la seconde valeur (36ₘᵢₙ) à la première valeur (36_{MAX}) et on incrémente ou on décrémente le compteur (56) en fonction de la durée relevée.

8. Procédé selon la revendication 6 ou la revendication 7, **caractérisé en ce que** l'on compare la durée relevée à la moyenne des valeurs (T₁, T₂) pour incrémenter ou décrémenter le compteur

9. Procédé selon l'une des revendications 6 à 8, **caractérisé en ce que :**
- on utilise un capteur (2) générant un quatrième signal (38) et un cinquième signal (40) similaires, mais déphasés,
- on génère le premier signal (32) en soustrayant le cinquième signal (40) au quatrième signal (38), et
- lors de l'étape a), on détecte le passage (12, 14) du premier signal (32) par la valeur nulle.

10. Procédé selon la revendication 9 lorsqu'elle dépend de la revendication 7 ou la revendication 8, **caractérisé en ce que** lors de l'étape e), on détermine si le premier signal (32) prend des valeurs positives après être passé par la valeur nulle.

## Claims

1. Device (1) for determining the position of an internal combustion engine comprising a rotary element, whereby said device comprises:
- A sensor (2) comprising a rotary part (8) and a fixed part (6), whereby said rotary part (8) is linked to the rotary element and comprises a plurality of essentially identical reference points (26) that are offset angularly by one increment, said fixed part (6) comprising:
■ First means (16, 18, 22, 30) for generating a first signal (32) based on the relative position of reference points (26) with respect to the fixed part (6),
■ Second means (16, 20) for generating a second signal (34) based on the relative position of the reference points (26) with respect to the fixed part (6), whereby said first signal (32) and said second signal (34) are similar but phase-shifted,
■ Means of analysis (10) connected to the first means (16, 18, 22, 30) and to the second means (16, 20), whereby said means of analysis (10) comprise third means (46) for detecting at least one characteristic event (12, 14) on the first signal and fourth means (48) for generating a third signal (36) of binary type that takes on a first value (36_{MAX}) or a second value (36ₘᵢₙ), whereby said fourth means (18) generate an alternation of the third signal (36) between the first value (36_{MAX}) and the second value (36ₘᵢₙ) after detection of at least one of the characteristic events (12, 14) on the first signal (32),
- Engine control means (4) connected to the means of analysis of the sensor (10), whereby said engine control means (4) comprise:
■ A counter (56) that is intended to represent the position of the rotary element,
■ Fifth means (50) for detecting the alternations of the third signal (36) between the first value (36_{MAX}) and the second value (36ₘᵢₙ) and modifying the counter (56) based on said alternations,
■ Sixth means (52) for generating actions on engine elements such as spark plugs (68) or fuel injectors (70) based on the value of counter (56),
**characterised in that** the means of analysis (10) also comprise:
- Means of comparison (42) to compare the value of the second signal (34) to a reference value, when a characteristic event (12, 14) is detected on the first signal (32),
- Control means (44) for controlling the fourth means (48) for alternating the third signal (36) between the first value (36_{MAX}) and the second value (36ₘᵢₙ) only when a characteristic event (12, 14) is detected on the first signal (32) and when the result of the comparison (58) is positive.

2. Device according to claim 1, **characterised in that:**
- The means of analysis (10) also comprise seventh means (54) for detecting the variation of the first signal when a characteristic event (12, 14) is detected on the first signal (32) and for comparing it to a reference value, and
- the fourth means (48) generate an alternation (66) from the second value (36ₘᵢₙ) to the first value (36_{MAX}) after the second value (36ₘᵢₙ) is held for a period (T₁, T₂) based on the result of comparison (60) between the variations of the first signal (32) and the reference value,
- the fifth means (50) compare to a reference value the period (T₁, T₂) between alternation (64) from the first value (36_{MAX}) to the second value (36ₘᵢₙ), and the alternation (66) from the second value (36ₘᵢₙ) to the first value (36_{MAX}), and said means increment or decrement the counter (56) based on a result (62) of this comparison.

3. Device according to claim 1, **characterised in that:**
- The fixed part of the sensor comprises:
■ A first probe (18) that generates a fourth essentially sinusoidal signal (38),
■ A second probe (22) that is similar to the first probe (18), placed close to the first probe (18) and generating a fifth signal (40) that is essentially similar to the fourth signal (38) but phase-shifted relative to the fourth signal (38),
■ Means (30) for subtracting the fifth signal (40) from the fourth signal (38), generating the first signal (32),
- The third means (46) detect the passing of the first signal (32) through the zero value.

4. Device according to claim 3, **characterised in that:**
- The second means comprise a third probe (20), similar to the first probe (18) and to the second probe (22), placed approximately in the centre of the first probe (18) and the second probe (22), whereby said second signal (34) varies between a minimum value (34ₘᵢₙ) and a maximum value (34_{MAX}).
- The means of comparison (42) compare the value of the second signal (34) to its minimum value (34ₘᵢₙ) and/or to its maximum value (34_{MAX}), when the characteristic event (12, 14) is detected on the first signal (32).

5. Device according to any one of the preceding claims, **characterised in that**, the fixed part of the sensor comprises a magnet (16), the rotary part of the sensor comprises a plurality of ferromagnetic teeth (26), and the first means and the second means each comprise a Hall effect probe or a magnetoresistive probe (18, 20, 22).

6. Method for determining the position of an internal combustion engine comprising a rotary element, in which:
- A sensor (2) comprising a fixed part (6) and a rotary part (8) is used, whereby the rotary part (8) comprises a plurality of essentially identical reference points (26) that are offset angularly by one increment, whereby said sensor generates a first signal (32) and a second signal (34) that are similar but phase-shifted,
- A binary third signal (36) that takes on a first value (36_{MAX}) or a second value (36ₘᵢₙ) is transmitted from the sensor (2) to an engine control means (4), whereby said method comprises the following steps:
a) A characteristic event (12, 14) is detected on the first signal (32),
b) The third signal (36) is alternated (64) from the first value (36_{MAX}) to the second value (36ₘᵢₙ),
c) Alternations (64) of the third signal (36) are detected in the engine control means (4), and the number of alternations of the third signal (36) is counted in a counter (56),
d) Actions on the engine elements such as spark plugs (68) or fuel injectors (70) are generated based on the value of counter (56),
**characterised in that** during step a), in addition, the value of the second signal (34) is compared (42) to a reference value, and step b) is performed only if the result (58) of the comparison between the value of second signal (34) and the reference value during step a) is positive.

7. Method according to claim 6, **characterised in that**
- the variation of the first signal (32) is detected (54) during step a),
- during a step e), said variation is compared to a reference value, and
after step b), the third signal (36) is held at the second value (36ₘᵢₙ) for a period (T₁, T₂) based on a result (60) of the comparison between the variation of the first detected signal (32) and the reference value, then the third signal (36) is alternated (66) from the second value (36ₘᵢₙ) to the first value (36_{MAX}), the period between the alternation (64) of the third signal (36) from the first value (36_{MAX}) to the second value (36ₘᵢₙ) and the alternation (66) of the second value (36ₘᵢₙ) to the first value (36_{MAX}) are detected in the engine control means (4), and the counter (56) is incremented or decremented based on the detected period.

8. Method according to claim 6 or claim 7, **characterised in that** the period that is detected is compared to the mean of values (T₁, T₂) for incrementing or decrementing the counter.

9. Method according to one of claims 6 to 8, **characterised in that:**
- a sensor (2) that generates a fourth signal (38) and a fifth signal (40) that are similar but phase-shifted is used,
- the first signal (32) is generated by subtracting the fifth signal (40) from the fourth signal (38), and
- during step a), passing (12, 14) of the first signal (32) through the zero value is detected.

10. Method according to claim 9, when dependent on claim 7 or claim 8, **characterised in that** during step e), it is determined whether the first signal (32) takes on positive values after passing through the zero value.

## Patentansprüche

1. Einrichtung (1) zur Bestimmung der Position eines Verbrennungsmotors, der ein sich drehendes Element umfasst, wobei die Einrichtung Folgendes umfasst:
- einen Sensor (2), der einen sich drehenden Teil (8) und einen feststehenden Teil (6) umfasst, wobei der sich drehende Teil (8) mit dem sich drehenden Element verbunden ist und eine Mehrzahl Marken (26) aufweist, die im Wesentlichen identisch und jeweils um einen Schritt winkelversetzt sind, wobei der feststehende Teil (6) Folgendes umfasst:
• erste Mittel (16, 18, 22, 30) zum Erzeugen eines ersten Signals (32) in Abhängigkeit von der relativen Position der Marken (26) in Bezug auf den feststehenden Teil (6),
• zweite Mittel (16, 20) zum Erzeugen eines zweiten Signals (34) in Abhängigkeit von der relativen Position der Marken (26) in Bezug auf den feststehenden Teil (6), wobei das erste Signal (32) und das zweite Signal (34) ähnlich aber phasenverschoben sind,
• Analysemittel (10), die mit den ersten Mitteln (16, 18, 22, 30) und zweiten Mitteln (16, 20) verbunden sind, wobei die Analysemittel (10) dritte Mittel (46) zum Erfassen von mindestens einem charakteristischen Ereignis (12, 14) am ersten Signal und vierte Mittel (48) zum Erzeugen eines dritten Signals (36) von binärer Art, das einen ersten Wert (36_{MAX}) oder einen zweiten Wert (36ₘᵢₙ) annimmt, umfassen, wobei die vierten Mittel (18) ein Umschalten des dritten Signals (36) zwischen dem ersten Wert (36_{MAX}) und dem zweiten Wert (36ₘᵢₙ) nach Erfassen von mindestens einem der charakteristischen Ereignisse (12, 14) am ersten Signal (32) erzeugen,
- Motorsteuermittel (4), die mit den Analysemitteln des Sensors (10) verbunden sind, wobei die Motorsteuermittel (4) Folgendes umfassen:
• einen Zähler (56), der dafür bestimmt ist, die Position des sich drehenden Elements darzustellen,
• fünfte Mittel (50) zum Erfassen der Umschaltungen des dritten Signals (36) zwischen dem ersten Wert (36_{MAX}) und dem zweiten Wert (36ₘᵢₙ) und zum Ändern des Zählers (56) in Abhängigkeit von den Umschaltungen,
• sechste Mittel (52) zum Erzeugen von Wirkungen auf Motorelemente, wie etwa Zündkerzen (68) oder Kraftstoffeinspritzdüsen (70), in Abhängigkeit vom Wert des Zählers (56),
**dadurch gekennzeichnet, dass** die Analysemittel (10) des Weiteren Folgendes umfassen:
- Vergleichsmittel (42) zum Vergleichen des Wertes des zweiten Signals (34) mit einem Referenzwert, wenn am ersten Signal (32) ein charakteristisches Ereignis (12, 14) festgestellt wird,
- Befehlsmittel (44), um den vierten Mitteln (48) zu befehlen, das dritte Signal (36) nur dann zwischen dem ersten Wert (36_{MAX}) und dem zweiten Wert (36ₘᵢₙ) umzuschalten, wenn ein charakteristisches Ereignis (12, 14) am ersten Signal (32) festgestellt wird und wenn das Vergleichsergebnis (58) positiv ist.

2. Einrichtung nach Anspruch 1, **dadurch gekennzeichnet, dass:**
- die Analysemittel (10) des Weiteren siebte Mittel (54) umfassen, um die Schwankung des ersten Signals festzustellen, wenn ein charakteristisches Ereignis (12, 14) am ersten Signal (32) festgestellt wird, und um sie mit einem Referenzwert zu vergleichen, und
- die vierten Mittel (48) eine Umschaltung (66) vom zweiten Wert (36ₘᵢₙ) auf den ersten Wert (36_{MAX}) erzeugen, und zwar nach Halten des zweiten Wertes (36ₘᵢₙ) während einer Dauer (T₁, T₂) in Abhängigkeit vom Ergebnis des Vergleiches (60) zwischen den Schwankungen des ersten Signals (32) und dem Referenzwert,
- die fünften Mittel (50) die Dauer (T₁, T₂) zwischen der Umschaltung (64) vom ersten Wert (36_{MAX}) auf den zweiten Wert (36ₘᵢₙ) und der Umschaltung (66) vom zweiten Wert (36ₘᵢₙ) auf den ersten Wert (36_{MAX}) mit einem Referenzwert vergleichen und den Zähler (56) in Abhängigkeit vom Ergebnis (62) dieses Vergleichs schrittweise erhöhen oder verringern.

3. Einrichtung nach einem der vorhergehenden Ansprüche, **dadurch gekennzeichnet, dass:**
- der feststehende Teil des Sensors Folgendes umfasst:
• eine erste Sonde (18), die ein viertes Signal (38) erzeugt, das im Wesentlichen sinusförmig ist,
• eine zweite Sonde (22) ähnlich der ersten Sonde (18), die in der Nähe der ersten Sonde (18) angeordnet ist und ein fünftes Signal (40) erzeugt, das im Wesentlichen ähnlich dem vierten Signal (38), aber in Bezug auf das vierte Signal (38) phasenverschoben ist,
• Mittel (30), um das fünfte Signal (40) vom vierten Signal (38) abzuziehen, wodurch das erste Signal (32) erzeugt wird,
- die dritten Mittel (46) das Passieren des Nullwertes vom ersten Signal (32) erfassen.

4. Einrichtung nach Anspruch 3, **dadurch gekennzeichnet, dass:**
- die zweiten Mittel eine dritte Sonde (20) umfassen, die der ersten Sonde (18) und der zweiten Sonde (22) ähnlich und im Wesentlichen in der Mitte zwischen der ersten Sonde (18) und der zweiten Sonde (22) angeordnet ist, wobei das zweite Signal (34) zwischen einem Mindestwert (34ₘᵢₙ) und einem Höchstwert (34_{MAX}) schwankt,
- die Vergleichsmittel (42) den Wert des zweiten Signals (34) mit seinem Mindestwert (34ₘᵢₙ) und/oder seinem Höchstwert (34_{MAX}) vergleichen, wenn das charakteristische Ereignis (12, 14) am ersten Signal (32) festgestellt wird.

5. Einrichtung nach einem der vorhergehenden Ansprüche, **dadurch gekennzeichnet, dass** der feststehende Teil des Sensors einen Magnet (16) umfasst, der sich drehende Teil des Sensors eine Mehrzahl ferromagnetischer Zähne (26) umfasst, und die ersten Mittel und zweiten Mittel jeweils eine Hall-Sonde oder eine Sonde magnetoresistiver Art (18, 20, 22) umfassen.

6. Verfahren zur Bestimmung der Position eines Verbrennungsmotors, der ein sich drehendes Element umfasst, wobei:
- ein Sensor (2) verwendet wird, der einen feststehenden Teil (6) und einen sich drehenden Teil (8) umfasst, wobei der sich drehende Teil (8) mehrere Marken (26) aufweist, die im Wesentlichen identisch und jeweils um einen Schritt winkelversetzt sind, wobei der Sensor ein erstes Signal (32) und ein zweites Signal (34) erzeugt, die ähnlich aber phasenverschoben sind,
- ein Binärsignal (36), das einen ersten Wert (36_{MAX}) oder zweiten Wert (36ₘᵢₙ) annimmt, vom Sensor (2) an Motorsteuermittel (4) übertragen wird, wobei das Verfahren folgende Schritte umfasst:
a) Erfassen eines charakteristischen Ereignisses (12, 14) am ersten Signal (32),
b) Umschalten (64) lassen des dritten Signals (36) vom ersten Wert (36_{MAX}) auf den zweiten Wert (36ₘᵢₙ),
c) Erfassen der Umschaltungen (64) des dritten Signals (36) in den Motorsteuermitteln (4) und Zählen der Anzahl der Umschaltungen des dritten Signals (36) in einem Zähler (56),
d) Erzeugen von Wirkungen auf Motorelemente, wie etwa Zündkerzen (68) oder Kraftstoffeinspritzdüsen (70), in Abhängigkeit vom Wert des Zählers (56),
**dadurch gekennzeichnet, dass** im ersten Schritt a) des Weiteren der Wert des zweiten Signals (34) mit einem Referenzwert verglichen (42) und Schritt b) nur ausgeführt wird, wenn das Ergebnis (58) des Vergleichs zwischen dem Wert des zweiten Signals (34) und dem Referenzwert in Schritt a) positiv ist.

7. Verfahren nach Anspruch 6, **dadurch gekennzeichnet, dass:**
- die Schwankung des ersten Signals (32) in Schritt a) festgestellt (54) wird,
- in einem Schritt e) die Schwankung mit einem Referenzwert verglichen wird, und
- nach dem Schritt b) das dritte Signal (36) auf dem zweiten Wert (36ₘᵢₙ) gehalten wird, und zwar während einer Dauer (T₁, T₂) in Abhängigkeit vom Ergebnis (60) des Vergleiches zwischen der festgestellten Schwankung des ersten Signals (32) und dem Referenzwert, dann wird das dritte Signal (36) vom zweiten Wert (36ₘᵢₙ) auf den ersten Wert (36_{MAX}) umgeschaltet (66), die Dauer zwischen der Umschaltung (64) des dritten Signals (36) vom ersten Wert (36_{MAX}) auf den zweiten Wert (36ₘᵢₙ) und der Umschaltung (66) vom zweiten Wert (36ₘᵢₙ) auf den ersten Wert (36_{MAX}) wird in den Motorsteuermitteln (4) festgestellt und der Zähler (56) wird in Abhängigkeit von der festgestellten Dauer schrittweise erhöht oder verringert.

8. Verfahren nach Anspruch 6 oder 7, **dadurch gekennzeichnet, dass** die festgestellte Dauer mit dem Durchschnitt der Werte (T₁, T₂) verglichen wird, um den Zähler schrittweise zu erhöhen oder zu verringern.

9. Verfahren nach einem der Ansprüche 6 bis 8, **dadurch gekennzeichnet, dass**:
- ein Sensor (2) verwendet wird, der ein viertes Signal (38) und ein fünftes Signal (40) erzeugt, die ähnlich aber phasenverschoben sind,
- das erste Signal (32) durch Abziehen des fünften Signals (40) vom vierten Signal (38) erzeugt wird, und
- in Schritt a) das Passieren (12, 14) des Nullwertes vom ersten Signal (32) erfasst wird.

10. Verfahren nach Anspruch 9, wenn er von Anspruch 7 oder 8 abhängig ist, **dadurch gekennzeichnet, dass** in Schritt e) festgestellt wird, ob das erste Signal (32) positive Werte annimmt, nachdem es den Nullwert passiert hat.
